# EUROPEAN PATENT SPECIFICATION

(11) **EP 3 414 613 B1**
(45) Date of publication and mention of the grant of the patent: **23.04.2025**
(21) Application number: 17750663.1
(22) Date of filing: 08.02.2017
(51) Int. Cl.: G02B 26/02, G02F 1/03, G09G 3/20, G09G 3/36, G09G 3/34

(54) **METHODS AND APPARATUS FOR OPERATING AN ELECTRO-OPTIC DISPLAY IN WHITE MODE**
VERFAHREN UND VORRICHTUNG ZUM BETRIEB EINER ELEKTROOPTISCHEN ANZEIGE IM WEISSMODUS
PROCÉDÉS ET APPAREIL D'EXPLOITATION D'UN AFFICHEUR ÉLECTRO-OPTIQUE EN MODE DE BLANC

(30) Priority: 08.02.2016 US 201662292829 P
(43) Date of publication of application: 19.12.2018
(73) Proprietor: E Ink Corporation, Billerica, Massachusetts 01821-4165 (US)
(72) Inventor: EMELIE, Pierre-Yves, Billerica, Massachusetts 01821-4165 (US); CROUNSE, Kenneth R., Billerica, Massachusetts 01821-4165 (US)
(74) Representative: Kilburn & Strode LLP
(86) International application number: PCT/US2017/016925
(87) International publication number: WO 2017/139323

(56) References cited:
- US-A1- 2006 232 531
- US-A1- 2007 188 497
- US-A1- 2009 058 797
- US-A1- 2010 245 375
- US-A1- 2012 139 963
- US-A1- 2013 194 250

## Description

### BACKGROUND

### Field

The present application relates to method for driving electro-optic displays and to displays arranged to use such driving method.

### Related Art

An electro-optic display can be operated by applying voltage signals to one or more pixels of the electro-optic display.

US 2012/0129963 A1 describes an electrophoretic display apparatus and a method for driving the same, which facilitate minimization of the flickering of the screen as well as minimization of the unintended gray scale transition caused by the neighboring cells. This application also describes a method for measuring the image stability of an electrophoretic display apparatus which allows a user to visually recognize any unintended gray scale transition that may occur after a predetermined time passes without a data voltage supplied and to identify whether the degree of the unintended gray scale transition exceeds an allowable range. When an image switching is performed, no data voltage is supplied to a first cell to be maintained with a first gray scale without gray scale transition, and a data voltage of a predetermined waveform is supplied to a second cell to be maintained with a second gray scale without gray scale transition. For example, Figure 10 of this application shows a method in which pixels undergoing white-white transitions are not driven, while pixels undergoing black-black, light gray-light gray and dark gray-dark gray transitions are driven.

### SUMMARY

This invention provides a method of operating an electrophoretic display in accordance with the appended claims.

The present invention also provides an electrophoretic display configured to perform the method of the invention.

### BRIEF DESCRIPTION OF DRAWINGS

Various aspects and embodiments of the application will be described with reference to the following figures. It should be appreciated that the figures are not necessarily drawn to scale. Items appearing in multiple figures are indicated by the same reference number in all the figures in which they appear.
FIG. 1 is a schematic drawing of a cross-sectional diagram of an example of an electro-optic display.
FIG. 2A is an exemplary waveform used to transition a pixel from a black state to a white state.
FIG. 2B is an exemplary waveform used to transition a pixel from a white state to a black state.
FIGs. 3A and 3B are schematics illustrating the formation of light edge artifacts in images displayed on an electro-optic display.
FIG. 4 is an exemplary waveform used to regenerate a black optical state in an exemplary method of operating an electro-optic display.
FIG. 5 is a flowchart illustrating an exemplary method of operating an electro-optic display, according to some embodiments of the present invention.
FIG. 6 is a flowchart illustrating an exemplary method of operating an electro-optic display, according to some embodiments of the present invention.
FIG. 7 is a flowchart illustrating an exemplary method of operating an electro-optic display, according to some embodiments of the present invention.
FIG. 8A is an exemplary image of text displayed without correction for light edge artifacts.
FIG. 8B is an exemplary image of text displayed with correction for light edge artifacts, according to the subject matter presented herein.

### DETAILED DESCRIPTION

The present application utilizes drive signals to reduce the presence of edge artifacts in images displayed on an electrophoretic display. One type of edge artifact is the appearance of light edges in dark regions, such as in the body of text characters displayed in white mode where the text is in a black state and the background is in a white state. This type of artifact can arise when a display is driven using techniques to reduce the flashiness of the display by not applying voltage signals (or zero voltage) to pixels that remain in the same state from one image to a subsequent image, which may be considered as a "null state transition."

The term "gray state" is used herein in its conventional meaning in the imaging art to refer to a state intermediate two extreme optical states of a pixel, and does not necessarily imply a black-white transition between these two extreme states. For example, several of the E Ink patents and published applications referred to above describe electrophoretic displays in which the extreme states are white and deep blue, so that an intermediate "gray state" would actually be pale blue. Indeed, as already mentioned, the change in optical state may not be a color change at all. The terms "black" and "white" may be used hereinafter to refer to the two extreme optical states of a display, and should be understood as normally including extreme optical states which are not strictly black and white, for example the aforementioned white and dark blue states. The term "monochrome" may be used hereinafter to denote a drive scheme which only drives pixels to their two extreme optical states with no intervening gray states.

Much of the discussion below will focus on methods for driving one or more pixels of an electro-optic display through a transition from an initial gray level (or "graytone") to a final gray level (which may or may not be different from the initial gray level). The terms "gray state," "gray level" and "graytone" are used interchangeably herein and include the extreme optical states as well as the intermediate gray states. The number of possible gray levels in current systems is typically 2-16 due to limitations such as discreteness of driving pulses imposed by the frame rate of the display drivers and temperature sensitivity. For example, in a black and white display having 16 gray levels, usually, gray level 1 is black and gray level 16 is white; however, the black and white gray level designations may be reversed. Herein, graytone 1 will be used to designate black. Graytone 2 will be a lighter shade of black as the graytones progress towards graytone 16 (i.e., white).

The terms "bistable" and "bistability" are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element. It is shown in U.S. Patent No. 7,170,670 that some particle-based electrophoretic displays capable of gray scale are stable not only in their extreme black and white states but also in their intermediate gray states, and the same is true of some other types of electro-optic displays. This type of display is properly called "multi-stable" rather than bistable, although for convenience the term "bistable" may be used herein to cover both bistable and multi-stable displays.

The term "impulse" is used herein in its conventional meaning of the integral of voltage with respect to time. However, some bistable electro-optic media act as charge transducers, and with such media an alternative definition of impulse, namely the integral of current over time (which is equal to the total charge applied) may be used. The appropriate definition of impulse should be used, depending on whether the medium acts as a voltage-time impulse transducer or a charge impulse transducer.

The term "waveform" will be used to denote the entire voltage against time curve used to effect the transition from one specific initial gray level to a specific final gray level. Typically such a waveform will comprise a plurality of waveform elements; where these elements are essentially rectangular (i.e., where a given element comprises application of a constant voltage for a period of time); the elements may be called "pulses" or "drive pulses". The term "drive scheme" denotes a set of waveforms sufficient to effect all possible transitions between gray levels for a specific display. A display may make use of more than one drive scheme; for example, the aforementioned U. S. Patent No. 7,012,600 teaches that a drive scheme may need to be modified depending upon parameters such as the temperature of the display or the time for which it has been in operation during its lifetime, and thus a display may be provided with a plurality of different drive schemes to be used at differing temperature etc. A set of drive schemes used in this manner may be referred to as "a set of related drive schemes". It is also possible, as described in several of the aforementioned MEDEOD applications, to use more than one drive scheme simultaneously in different areas of the same display, and a set of drive schemes used in this manner may be referred to as "a set of simultaneous drive schemes".

The particle-based electrophoretic display, in which a plurality of charged particles move through a fluid under the influence of an electric field, has been the subject of intense research and development for a number of years. Electrophoretic displays can have attributes of good brightness and contrast, wide viewing angles, state bistability, and low power consumption when compared with liquid crystal displays. Nevertheless, problems with the long-term image quality of these displays have prevented their widespread usage. For example, particles that make up electrophoretic displays tend to settle, resulting in inadequate service-life for these displays.

As noted above, electrophoretic media require the presence of a fluid. In most prior art electrophoretic media, this fluid is a liquid, but electrophoretic media can be produced using gaseous fluids; see, for example, Kitamura, T., et al., "Electrical toner movement for electronic paper-like display", IDW Japan, 2001, Paper HCS1-1, and Yamaguchi, Y., et al., "Toner display using insulative particles charged triboelectrically", IDW Japan, 2001, Paper AMD4-4). See also U.S. Patents Nos. 7,321,459 and 7,236,291. Such gas-based electrophoretic media appear to be susceptible to the same types of problems due to particle settling as liquid-based electrophoretic media, when the media are used in an orientation which permits such settling, for example in a sign where the medium is disposed in a vertical plane. Indeed, particle settling appears to be a more serious problem in gas-based electrophoretic media than in liquid-based ones, since the lower viscosity of gaseous suspending fluids as compared with liquid ones allows more rapid settling of the electrophoretic particles.

Numerous patents and applications assigned to or in the names of the Massachusetts Institute of Technology (MIT) and E Ink Corporation describe various technologies used in encapsulated electrophoretic and other electro-optic media. Such encapsulated media comprise numerous small capsules, each of which itself comprises an internal phase containing electrophoretically-mobile particles in a fluid medium, and a capsule wall surrounding the internal phase. Typically, the capsules are themselves held within a polymeric binder to form a coherent layer positioned between two electrodes. The technologies described in the these patents and applications include:
(a) Electrophoretic particles, fluids and fluid additives; see for example U.S. Patents Nos. 7,002,728; and 7,679,814;
(b) Capsules, binders and encapsulation processes; see for example U.S. Patents Nos. 6,922,276; and 7,411,719;
(c) Films and sub-assemblies containing electro-optic materials; see for example U.S. Patents Nos. 6,982,178; and 7,839,564;
(d) Backplanes, adhesive layers and other auxiliary layers and methods used in displays; see for example U.S. Patents Nos. 7,116,318; and 7,535,624;
(e) Color formation and color adjustment; see for example U.S. Patent No. 7,075,502; and U.S. Patent Application Publication No. 2007/0109219;
(f) Methods for driving displays; see the aforementioned MEDEOD applications; and
(g) Applications of displays; see for example U.S. Patent No. 7,312,784; and U.S. Patent Application Publication No. 2006/0279527.

Many of the aforementioned patents and applications recognize that the walls surrounding the discrete microcapsules in an encapsulated electrophoretic medium could be replaced by a continuous phase, thus producing a so-called polymer-dispersed electrophoretic display, in which the electrophoretic medium comprises a plurality of discrete droplets of an electrophoretic fluid and a continuous phase of a polymeric material, and that the discrete droplets of electrophoretic fluid within such a polymer-dispersed electrophoretic display may be regarded as capsules or microcapsules even though no discrete capsule membrane is associated with each individual droplet; see for example, the aforementioned U.S. Patent No. 6,866,760. Accordingly, for purposes of the present application, such polymer-dispersed electrophoretic media are regarded as sub-species of encapsulated electrophoretic media.

A related type of electrophoretic display is a so-called "microcell electrophoretic display". In a microcell electrophoretic display, the charged particles and the fluid are not encapsulated within microcapsules but instead are retained within a plurality of cavities formed within a carrier medium, typically a polymeric film. See, for example, U.S. Patents Nos. 6,672,921 and 6,788,449, both assigned to Sipix Imaging, Inc.

Although electrophoretic media are often opaque (since, for example, in many electrophoretic media, the particles substantially block transmission of visible light through the display) and operate in a reflective mode, many electrophoretic displays can be made to operate in a so-called "shutter mode" in which one display state is substantially opaque and one is light-transmissive. See, for example, U.S. Patents Nos. 5,872,552; 6,130,774; 6,144,361; 6,172,798; 6,271,823; 6,225,971; and 6,184,856. Dielectrophoretic displays, which are similar to electrophoretic displays but rely upon variations in electric field strength, can operate in a similar mode; see U.S. Patent No. 4,418,346. Other types of electro-optic displays may also be capable of operating in shutter mode. Electro-optic media operating in shutter mode may be useful in multi-layer structures for full color displays; in such structures, at least one layer adjacent the viewing surface of the display operates in shutter mode to expose or conceal a second layer more distant from the viewing surface.

An encapsulated electrophoretic display typically does not suffer from the clustering and settling failure mode of traditional electrophoretic devices and provides further advantages, such as the ability to print or coat the display on a wide variety of flexible and rigid substrates. (Use of the word "printing" is intended to include all forms of printing and coating, including, but without limitation: pre-metered coatings such as patch die coating, slot or extrusion coating, slide or cascade coating, curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet printing processes; electrophoretic deposition (See U.S. Patent No. 7,339,715); and other similar techniques.) Thus, the resulting display can be flexible. Further, because the display medium can be printed (using a variety of methods), the display itself can be made inexpensively.

The bistable or multi-stable behavior of particle-based electrophoretic displays is in marked contrast to that of conventional liquid crystal ("LC") displays. Twisted nematic liquid crystals are not bi- or multi-stable but act as voltage transducers, so that applying a given electric field to a pixel of such a display produces a specific gray level at the pixel, regardless of the gray level previously present at the pixel. Furthermore, LC displays are only driven in one direction (from non-transmissive or "dark" to transmissive or "light"), the reverse transition from a lighter state to a darker one being effected by reducing or eliminating the electric field. Finally, the gray level of a pixel of an LC display is not sensitive to the polarity of the electric field, only to its magnitude, and indeed for technical reasons commercial LC displays usually reverse the polarity of the driving field at frequent intervals. In contrast, bistable electro-optic displays act, to a first approximation, as impulse transducers, so that the final state of a pixel depends not only upon the electric field applied and the time for which this field is applied, but also upon the state of the pixel prior to the application of the electric field.

Whether or not the electrophoretic medium used is bistable, to obtain a high-resolution display, individual pixels of a display must be addressable without interference from adjacent pixels. One way to achieve this objective is to provide an array of non-linear elements, such as transistors or diodes, with at least one non-linear element associated with each pixel, to produce an "active matrix" display. An addressing or pixel electrode, which addresses one pixel, is connected to an appropriate voltage source through the associated non-linear element. Typically, when the non-linear element is a transistor, the pixel electrode is connected to the drain of the transistor, and this arrangement will be assumed in the following description, although it is essentially arbitrary and the pixel electrode could be connected to the source of the transistor. Conventionally, in high resolution arrays, the pixels are arranged in a two-dimensional array of rows and columns, such that any specific pixel is uniquely defined by the intersection of one specified row and one specified column. The sources of all the transistors in each column are connected to a single column electrode, while the gates of all the transistors in each row are connected to a single row electrode; again the assignment of sources to rows and gates to columns is conventional but essentially arbitrary, and could be reversed if desired. The row electrodes are connected to a row driver, which essentially ensures that at any given moment only one row is selected, i.e., that there is applied to the selected row electrode a voltage such as to ensure that all the transistors in the selected row are conductive, while there is applied to all other rows a voltage such as to ensure that all the transistors in these non-selected rows remain non-conductive. The column electrodes are connected to column drivers, which place upon the various column electrodes voltages selected to drive the pixels in the selected row to their desired optical states. (The aforementioned voltages are relative to a common front electrode which is conventionally provided on the opposed side of the electro-optic medium from the non-linear array and extends across the whole display.) After a pre-selected interval known as the "line address time" the selected row is deselected, the next row is selected, and the voltages on the column drivers are changed so that the next line of the display is written. This process is repeated so that the entire display is written in a row-by-row manner.

Voltage signals applied to neighboring pixels can impact the optical state of the null state pixels, forming artifacts that can be carried to subsequent images. For example, a voltage signal may not be applied to a pixel that remains as part of a text character from one image to a subsequent image because it undergoes a black state to black state transition (B → B). This may reduce flashiness of the display by applying voltage signals only to pixels that change state between subsequent images. Although flashiness may be reduced, light edge artifacts can arise by such a drive scheme. For a pixel experiencing a null state transition, voltage signals applied to neighboring pixels may affect the optical state of the null state pixel, such as by impacting the distribution of electrophoretic medium of the pixel undergoing the null state transition and creating an undesired change in its optical state. A pixel identified to remain in a black state during a transition may have a lighter optical state because of one or more neighboring pixels undergoing a black state to white state transition. These "blooming events" may occur at the edges of objects displayed in an electro-optic display, such as the edges of text characters, and may be carried over to subsequent image transitions. Pixels having a lighter optical state may become surrounded by pixels displaying a black optical state in a subsequent image transition, forming light edge artifacts in the image that may be more apparent to a viewer of the display than if the light pixels are on the edge of an object. Accordingly, aspects of the present application relate to identifying pixels that are likely to negatively impact the visual aesthetics of the content displayed based on prior transitions of pixel neighboring the pixel of interest, and applying suitable corrective signals when appropriate to reduce or eliminate such negative impact.

Light edge artifacts can be reduced by identifying pixels that undergo null state transitions and applying a waveform configured to generate an optical state in the pixels when the pixel is likely to contribute to a light edge artifact. The waveform may be a voltage signal configured to regenerate an optical black state of a pixel that has, or may, become lighter because of voltage signals applied to neighboring pixels, such as through blooming. Regenerating an optical black state of the pixel may reduce the appearance of light edges that can occur when a pixel is transitioning from a non-black state to a black state and a neighboring pixel that has undergone a black state to black state transition. The waveform may include a voltage signal with amplitude and a duration or time suitable for generating a desired optical state. The voltage signal may be applied over multiple display frames to achieve the desired optical state of the pixel. Examples of suitable waveforms, including a transition waveform referred to as an inverted top-off pulse ("iTop pulse"), are described in aforementioned U.S. Patent Application No. 15/015,822.

Yet, if applied too frequently, such waveforms may create irreversible damage to the display, impacting the performance of the display and the quality of displayed images. Accordingly, the present application relates to methods for selectively applying the waveform to pixels in a manner that suitably balances reducing the appearance of light edge artifacts and the frequency at which the waveform is applied. The present invention includes identifying pixels undergoing a null state transition where the optical state of the pixels is likely to have been affected by the transitions of neighboring pixels. A waveform for regenerating an optical state of a null state pixel is applied when neighboring pixels have undergone transitions that may impact the optical state of the null state pixel. For a display operating in white mode, the methodapplies a waveform for regenerating an optical black state to a pixel designated to remain in a black state when neighboring pixels undergo transitions that may result in a lighter optical state of the pixel. The waveform is applied to a pixel when one or more cardinal neighbors of the pixel undergo a white state to a black state transition between subsequent images. In some embodiments, the waveform is applied to a pixel when one or more cardinal neighbors have a subsequent black state.

The aspects and embodiments described above, as well as additional aspects and embodiments, are described further below.

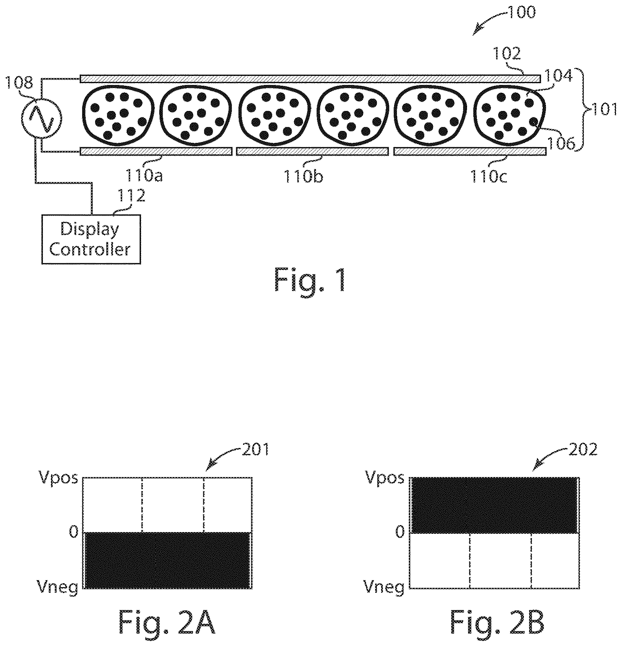

A cross-sectional view of exemplary electrophoretic display architecture is shown in FIG. 1. Display 100 includes an electrophoretic medium layer 101 which may comprise a plurality of capsules 104 each having a capsule wall surrounding fluid and electrophoretic particles 106 suspended in the fluid. The electrophoretic medium layer 101 is between electrode 102 and pixelated electrodes 110a, 110b, 110c, which define pixels of display 100. The electrophoretic particles 106 may be electrically charged and responsive to an electric field created by electrode 102 and one of electrodes 110a, 110b, 110c. Examples of suitable electrophoretic medium layers are described in U.S. Pat. Nos. 6,982,178 and 7,513,813.

The display 100 also includes a voltage source 108 coupled to the electrodes and configured to provide a drive signal to those electrodes. Although FIG. 1 shows coupling of the voltage source 108 between electrodes 102 and 110a, voltage source 108 may couple with electrodes 110b and 110c to provide drive signals to multiple pixels of display 100. The provided voltage then creates an electric field between the electrode 102 and one or more electrodes 110a, 110b, 110c. Thus, the electric field experienced by the electrophoretic medium layer 101 may be controlled by varying the voltage applied to the electrode 102 and one or more electrodes 110a, 110b, 110c. Varying the voltages applied to the desired pixels may provide control over the pixels of the display. Particles 106 within the electrophoretic medium layer 101 may move within their respective capsules 104 in response to the applied electric field created by the voltage between electrode 102 and electrodes 110a, 110b, 110c. Depending on the voltage applied to an electrode, the grayscale of the optical state of a pixel can be controlled.

Voltage source 108 may couple to display controller 112. Display controller 112 may include drive circuitry configured to perform a method of operating display 100. Display controller 112 may include a memory configured to store the states of one or more the pixels of display 100. Current and/or prior states of the pixels may be stored in the memory of display controller 112 in any suitable manner.

While FIG. 1 illustrates a microcapsule type electrophoretic display, various types of displays may be used according the techniques described in the present application. Generally, electro-optic displays including microcapsule type electrophoretic displays, microcell type electrophoretic displays, and polymer dispersed electrophoretic image displays (PDEPIDs) may utilize aspects of the present application. Moreover, although electrophoretic displays represent a suitable type of display according to aspects of the present application, other types of displays may also utilize one or more aspects of the present application. For example, Gyricon displays, electrochromic displays, and polymer dispersed liquid crystal displays (PDLCD) may also take advantage of aspects of the present application.

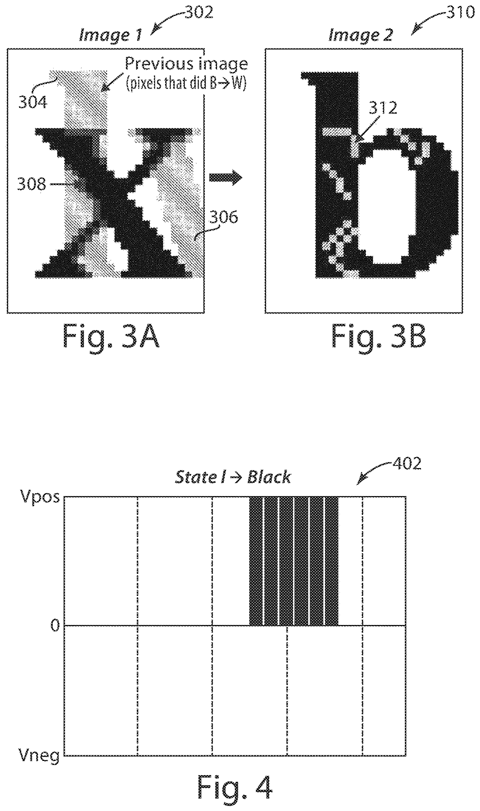

Pixels of an electrophoretic display, such as display 100 shown in FIG. 1, may be driven to different optical states depending on the voltage signals applied. The voltage signal used to obtain an optical state of a pixel may depend on the previous optical state of the pixel. Depending on the desired state transition for the pixel, the voltage signal may include negative and/or positive voltage. In the examples of FIGs. 2A, 2B, and 4, positive voltages are identified on the y-axis as Vpos and negative voltages as Vneg. In some instances, a waveform having a negative voltage, such as the waveform 201 shown in FIG. 2A, may drive a pixel of an electrophoretic display from a black state to a white state. A waveform having a positive voltage, such as the waveform 202 shown in FIG. 2B, may drive a pixel of an electrophoretic display from a white state to a black state. In FIGs. 2A and 2B, the x-axis represents time and the y-axis represents voltage. Although an electrophoretic display may be driven to another grayscale level, using only two gray levels may simplify the number and complexity of waveforms to use in driving the pixels to transition between different optical states. Using two gray levels may be particularly suited in displays with a higher resolution (e.g., greater than 300 dpi, greater than 500 dpi, between 300 dpi and 800 dpi, or any value or range of values within such ranges) because of the ability to present text to a viewer with a desired level of quality. Techniques for reducing light edge artifacts as described herein may be applied to electrophoretic displays driven at two gray levels (e.g., a white state and a black state) because of the crosstalk between neighboring pixels. For some electrophoretic displays, a voltage signal applied to a pixel may impact a portion of the neighboring pixel, such as approximately one-fifth of the neighboring pixel. Crosstalk between pixels may result in blooming events when a pixel undergoing a null transition has an optical state impacted by a neighboring pixel.

The appearance of edge artifacts appearing in the text displayed on an electrophoretic display is further discussed with reference to FIGs. 3A and 3B. FIG. 3A depicts a first image 302 (Image 1) that includes the letter "x" representing pixels that are currently in a black state. It is here assumed that a previous image to Image 1 included the letter "1" 304 and a portion of the letter "y" 306, which is shown by the downward diagonal line regions of FIG. 3A. Pixels of the letter "x" that overlap with the letters "1" 304 and "y" 306 of the previous image experienced a black state to black state transition since, in this example, the display is operating with letters as black with a white background. These overlapping pixels may remain in a black state by undergoing a null transition between the previous image and image 1 because a voltage signal is not necessary to change the optical state of these pixels. Pixels of the letters "1" 304 and "y" 306 that do not overlap with the letter "x" underwent a black state to white state transition to create the white background surrounding the letter "x." Although the letters "l" and "y" were displayed in the previous image, they are shown in FIG. 3A to illustrate the overlap between pixels of the letter "x" with the letters "l" 304 and "y" 306 of the previous image.

Applicant has appreciated that a pixel undergoing a null transition (e.g., black state to black state transition) that lacks a voltage signal may experience a blooming event by the presence of voltage signals applied to one or more neighboring pixels. An example is pixel 308. The pixels of the letter "x" that neighbor one or more of the pixels that underwent a black state to white state transition, such as pixel 308, may experience a blooming event and appear lighter than an optical black state. Such pixels are indicated by the dark gray regions within the letter "x." In the resulting image 1 shown in FIG. 3A, the pixels of the letter "x" that appear less dark are positioned at the edge of the text and border a pixel that experienced a black to white transition. Some of the pixels of the letter "x" underwent a white state to black state transition. These pixels are ones that do not overlap with the letters "l" 304 and "y" 306 and may appear darker than the pixels of the letter "x" which neighbor pixels that underwent a black to white transition.

The lighter pixels within the letter "x" resulting from a blooming event may be passed to subsequent images, particularly when the pixel experiences a subsequent null transition. As an example, FIG. 3B illustrates image 310 (Image 2) that includes the letter "b" which has pixels that overlap with the letter "x" of image 1 which underwent a null transition by remaining in a black state. Since some of the pixels of the letter "x" appeared in a lighter optical state due to blooming, this lighter appearance of these pixels is present in the current image of letter "b," an example being pixel 312. These lighter pixels create regions that appear less dark compared to other black pixels. Such light pixels may create the appearance of light "edges" or "lines" within the image and reduce the quality of the image.

Some embodiments of the present application relate to operating an electrophoretic display in a manner that reduces the appearance of light edges within a displayed image, such as those shown in FIG. 3B by pixels 312. Operation of an electrophoretic display may include selectively applying a voltage signal to pixels that may contribute to the presence of light edges, such as to pixels 312. Whether a pixel may contribute to light edge artifacts may be determined by previous transitions of the pixel and one or more pixels that neighbor the pixel in question. In a driving scheme in which voltages are not applied to pixels undergoing null state transitions, such pixels may be the most likely to contribute to the appearance of light edge artifacts. Such a pixel may experience a blooming event when voltage signals applied to one or more neighboring pixels alter the optical state of the pixel in question. The number of neighboring pixels may impact the degree of a blooming event for the pixel, affecting the optical state of the pixel. For example, a pixel may have up to four cardinal neighboring pixels. A moderate blooming event may occur when one cardinal neighbor undergoes a black to white transition. A strong blooming event may occur when all four cardinal neighboring pixels undergo a black to white transition. A pixel experiencing the strong blooming event may appear lighter than the moderate blooming event.

The effect of the blooming event can be reduced by applying a voltage signal to the pixel in question to generate an optical state of the pixel (e.g., a black optical state). While applying the voltage signal may reduce the appearance of bloomed pixels, applying the voltage signal too frequently may damage the electrophoretic display. The voltage signal may be a DC-imbalanced waveform and may result in the buildup of remnant voltage in the display over time as the waveform is applied. Some embodiments of the present application relate to detecting whether a pixel experiences a null transition, determining whether a threshold number of cardinal neighbors of the pixel transition from a black state to a white state during an image transition, and applying a voltage signal to the pixel in a subsequent image transition. The voltage signal may have a waveform configured to generate an optical black state of the pixel.

The type of transition to apply to a pixel may be determined by one or more previous waveform states of the pixel and/or other pixels of the display. A current state of a pixel may determine the type of waveform to apply to the pixel to change or alter the optical state of the pixel. A waveform state may correspond to a desired optical state of the pixel. Prior and/or current states of the pixels in the display may be stored in a display controller, or other suitable circuitry configured to perform a method of operating the display, and allow for determining an appropriate subsequent transition based on a prior or current state of a pixel.

Techniques of the present application relate to associating an indication state (or I state) to a pixel likely to have experienced a blooming event, and which therefore may be prone to appearing as a light pixel in subsequent images if no refresh, or corrective, signal is applied. A pixel may assume, or be assigned, an indication state when the pixel undergoes a black state to black state transition and one or more neighboring pixels undergoes a black state to white state transition. These conditions may identify pixels that have experienced a blooming event. Application of a voltage signal suitable to generate an optical black state in the identified "indication state" pixel may be applied in a subsequent transition to reduce the presence of light edge artifacts. In this manner, the indication state may refer to a pixel that should have a black optical state, but may not appear completely dark because of blooming events from neighboring pixels. Referring to FIG. 3A, pixel 308 may be set to an indication state because it remained in a black state and had one or more neighboring pixels that underwent a black to white transition. Such pixels in FIG. 3A contributed to the light edges that appeared in the letter "b" in FIG. 3B, such as pixel 312.

A voltage signal may be applied to a pixel in an indication state (I state) to generate an optical black state for the pixel and may be referred to as a "black regeneration waveform," according to some embodiments. The voltage signal may have a positive voltage value (e.g., Vpos) over a duration of time, the voltage assuming any suitable value. An exemplary voltage signal used to generate an optical black state is shown in FIG. 4 as waveform 402. The voltage signal may be applied over multiple display frames to achieve the desired result. The waveform may be referred to as an inverted top-off pulse (iTop pulse).

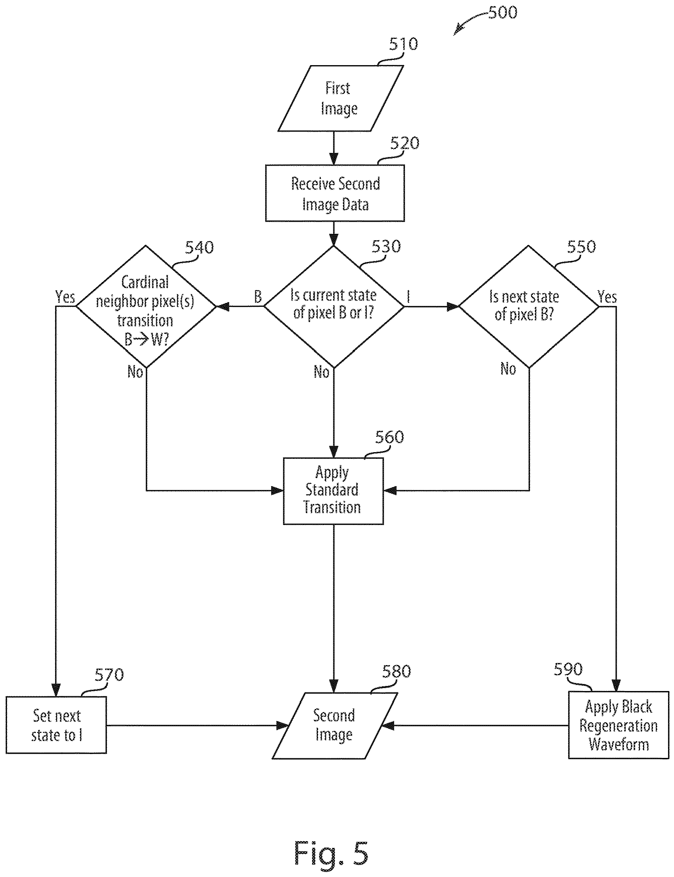

A method of operating an electro-optic display may include detecting a null state transition for one or more pixels and determining whether a threshold number of cardinal neighbors underwent a black state to white state transition between a first image and a second image. It should be noted that "first" and "second" in this context is not limited to an absolute value, but rather are meant to indicate a preceding image and subsequent image. Likewise, a "third" image is not an absolute value but indicates an image subsequent to a "second" image and there may be intervening images between a "second" image and a "third" image. The voltage signal or iTop pulse may be applied to a pixel in an indication state when a subsequent state is a black state. FIG. 5 shows steps of an exemplary method of operating an electro-optic display, according to some embodiments of the present invention. Method 500 may start with first image 510, such as the image prior to Image 1 in FIG. 3A showing the "l" 304 and "y" 306. First image 510 may have a set of states for the pixels of the display, which may be stored in a display controller, such as display controller 112 in FIG. 1. At act 520, second image data is received, such as by display controller 112. The second image data may include optical states of the pixels in the display in order to display the second image, such as Image 1 in FIG. 3A displaying the letter "x." For a given pixel, method 500 proceeds to act 530. If the current state of the pixel is in neither a black (B) state nor an indication (I) state, then a standard transition used to operate the electrophoretic display is applied by act 560 in displaying the second image by act 580.

If the current state of the pixel act 530 is black (B), then method 500 proceeds to act 540, which examines the transitions of the pixel's cardinal neighbors to determine whether one or more of the cardinal neighbors is undergoing a black (B) state to white (W) state transition from the first image to the second image. In some embodiments, act 540 may include determining whether a threshold number (e.g., 1, 2, 3, 4) of cardinal neighbors of the pixel transition from a black state to a white state. If there are no cardinal neighbors experiencing a black state to white state transition or if the number of cardinal neighbors experiencing a black state to white state transition is below a threshold, then the standard transition used to operate the electrophoretic display is applied by act 560 in displaying the second image by act 580. If, by contrast, there is one or more cardinal neighbors experiencing a black state to white state transition or if the number of cardinal neighbors experiencing a black state to white state transition is above a threshold, then the state of the pixel is set to an indication (I) state by act 570 to form the second image by act 580. In this manner, the pixel is identified as potentially experiencing a blooming event by one or more of its cardinal neighbors.

If the current state of the pixel at act 530 is in the indication (I) state, then method 500 proceeds to act 550, which determines the next state of the pixel from the data of the second image. If the next state of the pixel is not the black state (e.g., white state), then the standard transition used to operate the electrophoretic display is applied by act 560 in displaying the second image by act 580. If the next state of the pixel is the black (B) state, then a black regeneration waveform, such as the one depicted in FIG. 4, is applied to the pixel by act 590 in displaying the second image by act 580. In this manner, the black regeneration waveform is applied to those pixels identified as likely to have experienced a blooming event as indicated by being in the indication (I) state. Acts 550 and 590 may occur, for example, for pixel 308 when going from Image 1 of FIG. 3A to Image 2 of FIG. 3B.

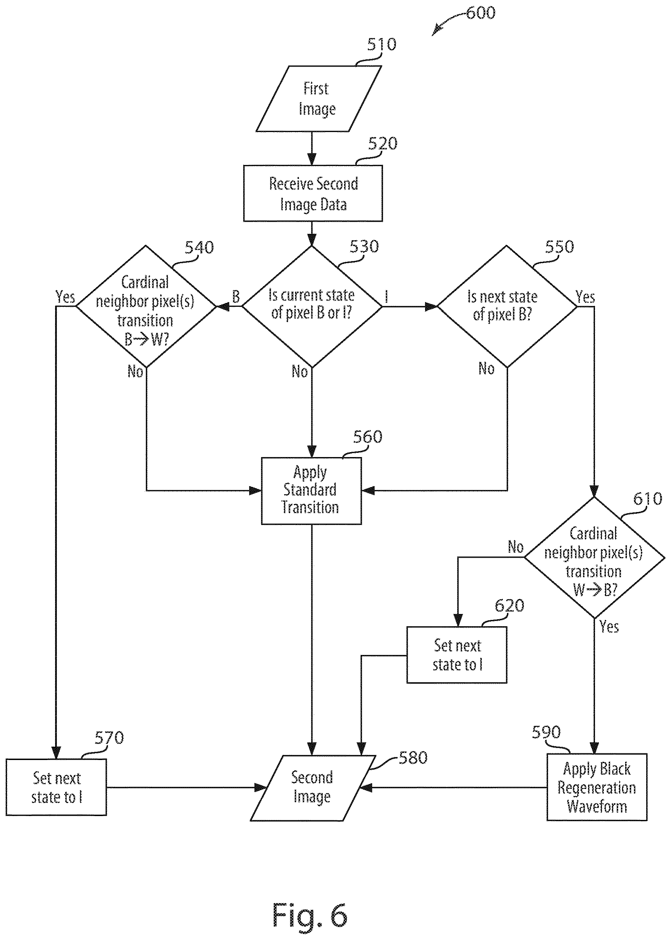

Additional steps to such a method of operating an electro-optic display may provide selectivity in when the black state regeneration waveform is applied. FIG. 6 shows steps of method 600 according to another embodiment, which includes additional steps to those of method 500 shown in FIG. 5. These additional steps provide further selection over when the black regeneration waveform is applied in act 590. A pixel that has a current state as an indication (I) state by act 530 and a next state as the black (B) state by act 550 proceeds to step 610 of method 600, which examines the type of transition for one or more cardinal neighbors of the pixel in transitioning to the second image. If one or more cardinal neighbors transition from a white (W) state to a black (B) state, then the black regeneration waveform is applied to the pixel by act 590 in displaying the second image by act 580. In some embodiments, if the number cardinal neighbors transition from a white (W) state to a black (B) state is above a threshold, then the black regeneration waveform is applied to the pixel. If the pixel does not meet the conditions of act 610 where there are no cardinal neighbors transitioning from a white (W) state to a black (B) state or the number of cardinal neighbors undergoing such a transition is below a threshold, then the pixel is set to the indication (I) state by act 620. In this manner, the pixel may receive the black regeneration waveform when one or more cardinal neighbors transition to a black state to reduce the likelihood of a lighter pixel next to a darker pixel and therefore the visibility of light edge artifacts to a viewer of the displayed second image. By selectively applying the black regeneration waveform under such conditions, a balance in the reduction of the presence of light edges and the frequency at which the waveform is applied can be achieved.

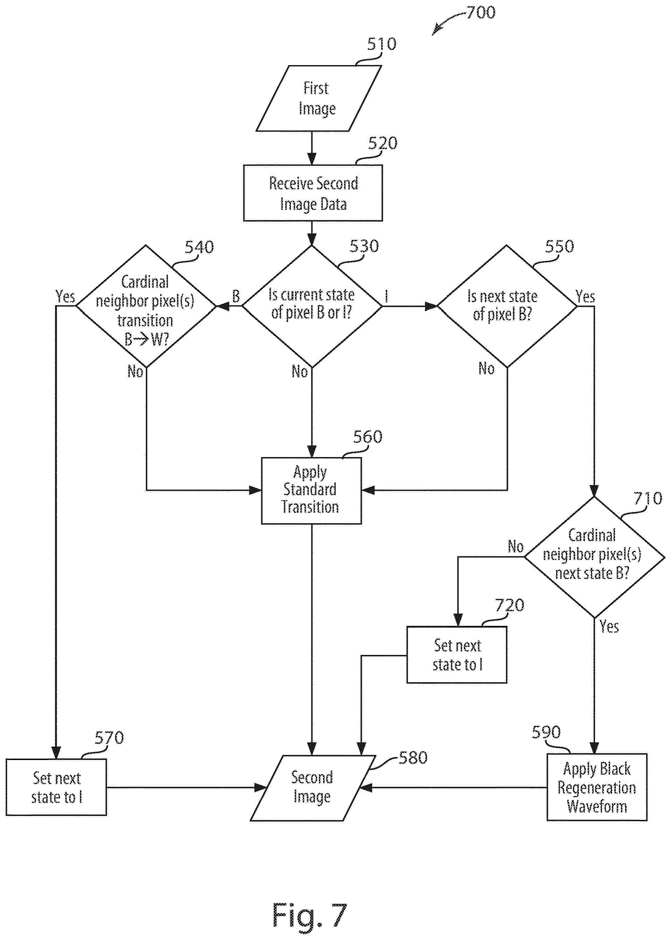

FIG. 7 shows alternative steps that may be implemented in operating an electro-optic display. Method 7 includes additional steps to those of method 500 shown in FIG. 5. These additional steps provide further selection over when the black regeneration waveform is applied in act 590. A pixel that has a current state as an indication (I) state by act 530 and a next state as the black (B) state by act 550 proceeds to step 710 of method 700, which examines the next state for one or more cardinal neighbors of the pixel in the second image. If one or more cardinal neighbors have a next state as a black (B) state, then the black regeneration waveform is applied to the pixel by act 590 in displaying the second image by act 580. In some embodiments, if the number cardinal neighbors transitioning to a black (B) state is above a threshold, then the black regeneration waveform is applied to the pixel by act 590. If the pixel does not meet the conditions of act 710 where there are no cardinal neighbors that have a next state as a black (B) state or the number of cardinal neighbors transitioning to a black state is below a threshold, then the pixel is set to the indication (I) state by act 720. Method 700 provides an alternative method for selectively applying the black regeneration waveform to pixels in reducing the presence of light edge artifacts in images displayed on the electro-optic display.

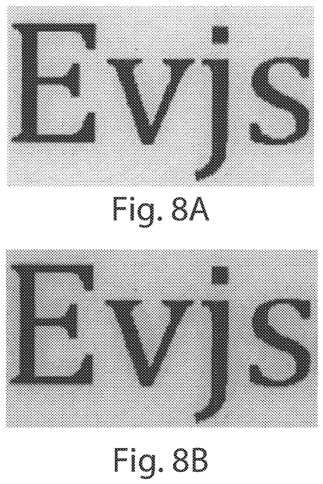

The techniques described herein may reduce the presence of light edge artifacts in displaying images, such as text, on an electro-optic display. FIG. 8A shows an example image of text displayed on an electro-optic display where such light edge correction is not used. The appearance of lighter regions in the text, particularly in the letters "v" and "j," is present. FIG. 8B shows an example image of the same text shown on an electro-optic display operated in a manner described herein to reduce the presence of such light edge artifacts.

## Claims

1. A method of operating an electrophoretic display (101) for reducing light edge artifacts, said display (101) being configured to display a sequence of black-and-white images comprising a first image (302, 304, 306), a second image (302, 308), and a subsequent image (310, 312), the method comprising the following steps:
during the first transition from the first image (302, 304, 306) to the second image:
selecting a first pixel (308) of the display (101);
detecting a null state transition of the first pixel (308) from black in the first image to black in the second image;
determining whether the number of cardinal neighbors of the first pixel (308) transitioning from a black state in the first image to a white state in the second image is at least equal to a threshold number of pixels; and
during the second transition from the second image to the subsequent image, applying to the first pixel a voltage signal, wherein the voltage signal has a waveform configured to regenerate an optical black state for the first pixel, in response to the number of cardinal neighboring pixels of the first pixel (308) transitioning from a black state in the first image to a white state in the second image being at least equal to the threshold number of pixels.

2. The method of claim 1, wherein applying to the first pixel a voltage signal is additionally in response to the one or more cardinal neighbors having black state in the subsequent image.

3. A display comprising:
an electrophoretic display; and
drive circuitry coupled to the electro-optic display and configured to perform the method of claim 1.

4. The display of claim 3, wherein the threshold number of cardinal neighbors is one.

5. The display of claim 3, wherein the threshold number of cardinal neighbors is greater than one.

## Patentansprüche

1. Verfahren zum Betreiben einer elektrophoretischen Anzeige (101) zum Reduzieren von Lichtkantenartefakten, wobei die Anzeige (101) dazu ausgelegt ist, eine Folge von Schwarzweißbildern anzuzeigen, die ein erstes Bild (302, 304, 306), ein zweites Bild (302, 308) und ein nachfolgendes Bild (310, 312) umfassen, wobei das Verfahren die folgenden Schritte umfasst:
während eines ersten Übergangs vom ersten Bild (302, 304, 306) zum zweiten Bild:
Auswählen eines ersten Pixels (308) der Anzeige (101);
Detektieren eines Nullzustandsübergangs des ersten Pixels (308) von schwarz im ersten Bild zu schwarz im zweiten Bild;
Bestimmen, ob die Anzahl von Hauptnachbarn des ersten Pixels (308), das von einem schwarzen Zustand im ersten Bild zu einem weißen Zustand im zweiten Bild übergeht, mindestens gleich einer ersten Schwellwertanzahl von Pixeln ist; und
in Reaktion darauf, dass die Anzahl von Hauptnachbarpixeln des ersten Pixels (308), das von einem schwarzen Zustand im ersten Bild zu einem weißen Zustand im zweiten Bild übergeht, mindestens gleich der Schwellwertanzahl von Pixeln ist, Anlegen eines Spannungssignals an das erste Pixel während des zweiten Übergangs vom zweiten Bild zum nachfolgenden Bild, wobei das Spannungssignal eine Wellenform aufweist, die dazu ausgelegt ist, einen optischen schwarzen Zustand für das erste Pixel zu regenerieren.

2. Verfahren nach Anspruch 1, wobei in Reaktion darauf, dass der eine oder die mehreren Hauptnachbarn im nachfolgenden Bild einen schwarzen Zustand aufweisen, das Anlegen eines Spannungssignals an das erste Pixel zusätzlich ist.

3. Anzeige, die Folgendes umfasst:
eine elektrophoretische Anzeige und
eine Ansteuerschaltung, die an die elektrooptische Anzeige gekoppelt und dazu ausgelegt ist, das Verfahren nach Anspruch 1 durchzuführen.

4. Anzeige nach Anspruch 3, wobei die Schwellwertanzahl von Hauptnachbarn eins ist.

5. Anzeige nach Anspruch 3, wobei die Schwellwertanzahl von Hauptnachbarn größer als eins ist.

## Revendications

1. Procédé d'exploitation d'un afficheur électrophorétique (101) pour réduire les artefacts de bordure de lumière, ledit afficheur (101) étant configuré pour afficher une séquence d'images en noir et blanc comprenant une première image (302, 304, 306), une deuxième image (302, 308) et une image suivante (310, 312), le procédé comprenant les étapes suivantes :
pendant la première transition de la première image (302, 304, 306) à la deuxième image :
la sélection d'un premier pixel (308) de l'afficheur (101) ;
la détection d'une transition d'état nulle du premier pixel (308) du noir dans la première image au noir dans la deuxième image ;
la détermination si le nombre de voisins cardinaux du premier pixel (308) passant d'un état noir dans la première image à un état blanc dans la deuxième image est au moins égal à un nombre seuil de pixels ; et
pendant la deuxième transition de la deuxième image à l'image suivante, l'application au premier pixel d'un signal de tension, où le signal de tension a une forme d'onde configurée pour régénérer un état noir optique pour le premier pixel, en réponse au fait que le nombre de pixels voisins cardinaux du premier pixel (308) passant d'un état noir dans la première image à un état blanc dans la deuxième image est au moins égal au nombre seuil de pixels.

2. Procédé selon la revendication 1, dans lequel l'application d'un signal de tension au premier pixel se fait en outre en réponse au fait qu'un ou plusieurs voisins cardinaux ont un état noir dans l'image suivante.

3. Afficheur comprenant :
un afficheur électrophorétique ; et
des circuits d'attaque couplés à l'afficheur électro-optique et configurés pour mettre en œuvre le procédé selon la revendication 1.

4. Afficheur selon la revendication 3, dans lequel le nombre seuil de voisins cardinaux est égal à un.

5. Afficheur selon la revendication 3, dans lequel le nombre seuil de voisins cardinaux est supérieur à un.
